# EUROPEAN PATENT APPLICATION

(11) **EP 2 000 703 A1**
(43) Date of publication of application: **10.12.2008**
(21) Application number: 07109564.0
(22) Date of filing: 04.06.2007
(51) Int. Cl.: F16H 9/16, F16H 9/18, F16H 55/56

(54) **Continuously variable transmission and drive means**

(71) Applicant: Elbee Beheer BV, 2100 AD Heemstede (NL)
(72) Inventor: Kossack, Lothar Hermann, 8650-140 Budens (PT)
(74) Representative: Uittenbogaart, Gustaaf Adolf

(57) **Abstract**

The invention concerns a continuously variable transmission comprising a first shaft with a first pulley rotating around a first rotation axis, a second shaft with a second pulley and a belt looped around the first pulley and the second pulley whereby the first pulley comprises two discs with conical surfaces which support the belt at a first radius and which are displaceable by displacing means relative to one another in the direction of the first rotation axis for changing the first radius. According to the invention both conical surfaces of the discs are provided with parallel ridges and slits parallel to the first rotation axis so that the conical surfaces intersect in a plane perpendicular to the rotation axis whereby the ridges of the one disc slot in the slits of the other disc.

## Description

The invention concerns a continuously variable transmission in accordance with the preamble of claim 1. In the known transmissions the belt is clamped between the discs so that these have to be positioned accurately relative to one another in order to maintain the belt at a radius. This requires accurate positioning and strong positioning means and this makes the transmission expensive.

In order to overcome this disadvantage the transmission is in accordance with claim 1. The intersecting conical surfaces support the belt in such a way that only small axial forces occur in the axial direction so that the transmission can be light.

In accordance with an embodiment, the design of the transmission is according to claim 2. This makes it easy to control the setting of the transmission.

In accordance with an embodiment, the design of the transmission is according to claim 3. In this way the setting of the transmission is adapted in an easy way to the rotation speed.

In accordance with an embodiment, the design of the transmission is according to claim 4. In this way the belt remains in the same axial position so that the belt can rotate in the plane wherein the second pulley can be located as well. In this way the movement of the belt is more stable.

In accordance with an embodiment, the design of the transmission is according to claim 5. In this way the belt maintains its tension in an easy way.

In accordance with an embodiment, the design of the transmission is according to claim 6 or 7. In this way the belt is supported in a stable way.

The invention also concerns a drive means in accordance with claim 8. This combination is a relative cheap and effective electrical drive for a vehicle.

Hereafter the invention is explained with the aid of embodiments of the invention using a drawing. In the drawing
Figure 1 shows a schematic section of a first embodiment of a continuously variable transmission,
Figure 2 shows section II - II of figure 1,
Figure 3 shows section III - III of figure 1 and 2, and
Figure 4 shows part of a schematic section similar to figure 1 of further embodiments of the continuously variable transmission.

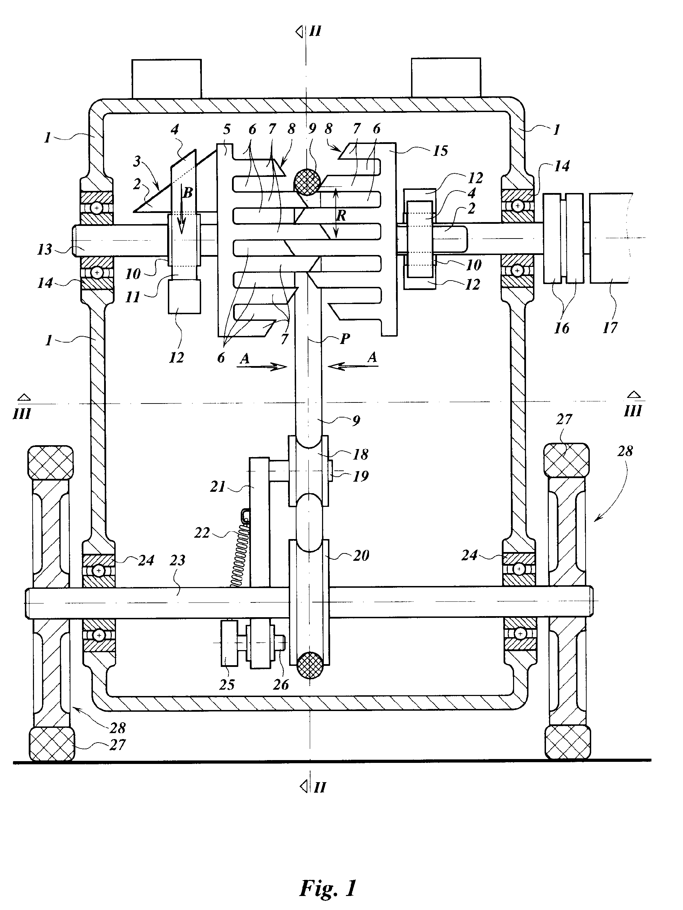

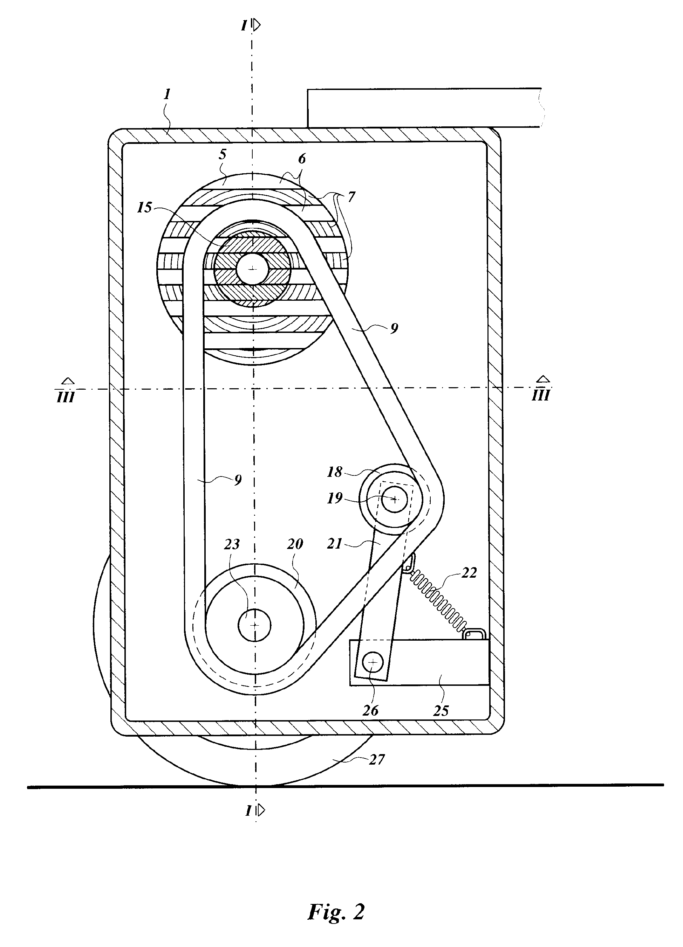

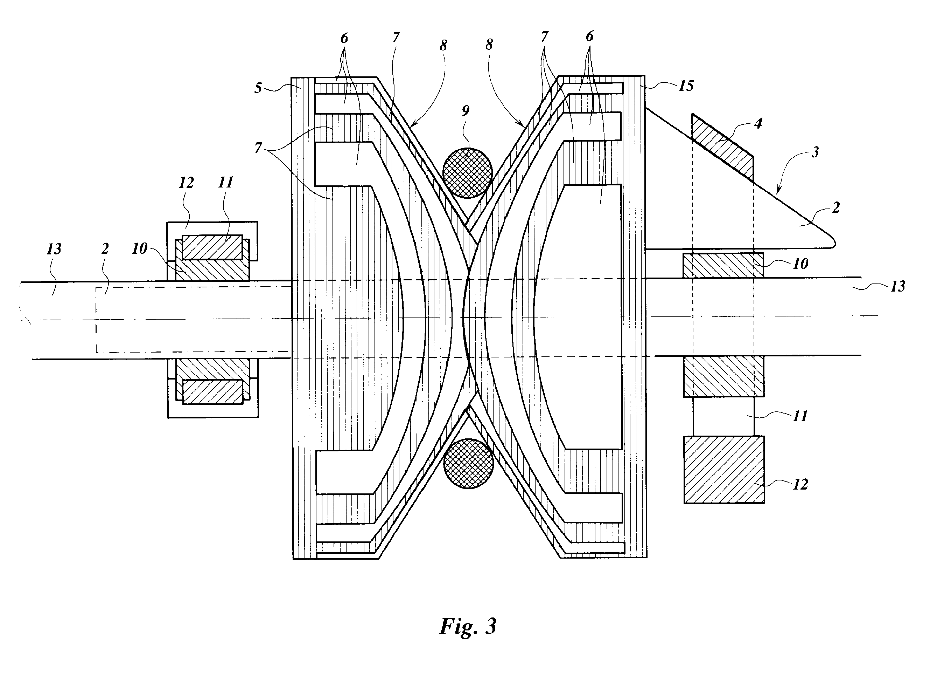

Figure 1, 2 and 3 show a housing 1 with a first shaft 13 mounted in bearings 14 and driven via a coupling 16 by a motor 17. Preferably, in the bearings 14 lubrication is enclosed. The motor 17 is preferably a motor that rotates at a variable rotation speed with higher speed at lower torque and an increased torque at low speed. A typical example of such a motor is a DC-motor.

On the first shaft 13, a first disc 5 and a second disc 15 are mounted whereby these discs 5, 15 can slide in the axial direction of the first shaft 13. The first disc 5 has a cylindrical body with a conical surface 8 directed towards the second disc 15 and the second disc 15 has a similar shape with the conical surface 8 directed towards the first disc 5. The conical surface 8 makes an angle with the rotation axis which angle is between 40 and 70 degrees and preferably between 50 and 60 degrees. The first disc 5 has in the conical surface 8 a number of slits 6, which are parallel to the rotation axis of the first shaft 13 and to the axis of the conical surface 8. The ridges 7 between the slits 6 have a thickness that is slightly less than the width of the slits 6. The second disc 15 has similar ridges 7 and slits 6 whereby the ridges 7 of the first disc 5 fit in the slits 6 of the second disc 15 and vice versa.

The first disc 5 and the second disc 15 can move in a direction A towards each other, whereby the conical surfaces 8 of the discs 5, 15 intersect as the ridges 7 of the one disc 5, 15 slide in the slits 6 of the other disc 5, 15, so that the conical surfaces 8 intersect in a plane P and form a V-shaped groove. At the side opposite to the conical surface 8 each disc 5, 15 has a wedge 2 which can slide over a driver 10 in the direction of the rotation axis of the first shaft 13. The driver 10 is fastened to the first shaft 13. A brace 4 with bars 11 is movably connected to the driver 10 and can slide in a direction B perpendicular to the rotation axis of the first shaft 13. The bars 11 slide in a groove in the driver 10 and enclose the wedge 2 so that the discs 5, 15 rotate with the first shaft 13. The discs 5, 15 rotate with the driver 10 and the first shaft 13 as the wedge 2 can only move in the longitudinal direction of the first shaft 13 relative to the driver 10. It is additionally possible that the first shaft 13 is provided with a key or a profile for preventing the rotation of the discs 5, 15 relative to the first shaft 13 whereby axial movements of the discs 5, 15 remain possible.

A belt 9 loops around the V-shaped groove formed by conical surfaces 8 of the discs 5, 15 and loops around a drive pulley 20 that is mounted on a second shaft 23. The centre plane of the drive pulley 20 lies more or less in the plane P formed by the intersecting conical surfaces 8 The second shaft 23 can rotate in bearings 24 that are mounted in the housing 1 and that are preferably provided with lubrication. The second shaft 23 extends to the outside of the housing 1 and on its ends wheels 28 with tyres 27 are mounted. The housing 1 has other wheels, not shown, for supporting the housing 1 on a floor.

The belt 9 rests against the conical surfaces 8 at a radius R. By moving the discs 5, 15 in the direction A the radius R increases so that the transmission ratio between the first axis 13 and the second axis 23 changes. For maintaining sufficient tension in the belt 9 so that there is sufficient friction between the belt 9 and the driving discs 5, 15 and the driven drive pulley 20 a tension pulley 18 presses against the belt 9. The tension pulley 18 can rotate around a pin 19 that is at the end of an arm 21. The arm 21 can rotate around a pin 26 that is mounted on a bracket 25. The bracket 25 is mounted in the housing 1. A spring 22 exerts a force on the arm 21 so that the tension pulley 18 tensions the belt 9 whereby changing the position of the tension pulley 19 absorbs changes in the radius R.

Changing the radius R changes the transmission ratio between the motor 17 and the wheels 28. Moving the discs 5, 15 in the longitudinal direction of the first shaft 13 in opposite direction changes the radius R. In the shown embodiment, this movement of the discs 5, 15 is effected by a weight 12, which is attached to the bars 11. When the first shaft 13 rotates at an increased rotation speed the driver 10 rotates the weight 12 at an increased speed thereby increasing the centrifugal force that the weight exerts on the bars 11. This centrifugal force on the weight 12 exerts a force on a slope 3 of the wedge 2 and this force pushes the discs 5, 15 towards each other in the direction A so that the radius R increases. Decreasing the rotation speed of the first shaft 13 decreases the centrifugal force on the slope 3 of the wedge 2 and the tension in the belt 9 pushes the discs 5, 15 in a direction opposite to the direction A so that the radius R decreases. Preferably, the surfaces of the slope 3 and the surface of the brace 4 that moves along the slope 3 are very smooth and can be provided with a suitable coating that reduces friction and wear.

The radius R has its lowest value when the rotation speed of the first shaft 13 and/or the second shaft 23 is more or less zero and the housing 1 is at a stand still. When the motor 17 is at a low rotation speed its torque is at its highest. In that situation the radius R is small so that the transmission ratio between the first shaft 13 and the second shaft 23 is such that the motor 17 transmits the highest torque to the second shaft 23 and the wheels 28. This gives the highest acceleration of the housing 1 when it is most needed and is advantageous for starting its movement.

The increasing rotation speed of the motor 17 causes its torque to decrease so that the tension in the belt 9 decreases so that the forces of the belt 9 on the conical surface 8 decrease. The increasing rotation speed of the first shaft 13 increases the centrifugal force on the weights 12 so that the force that the brace 4 exerts on the slope 3 increases. These changing forces on the slope 3 of the wedge 2 and the conical surface 8 of the discs 5, 15 cause the discs 5, 15 to move in the direction A. Now the speed of the second shaft 23 increases relative to the speed of the first shaft 13 so that the motor 17 drives the housing 1 to a high speed.

When during driving the housing 1, which is for instance part of an electrically driven car, meets an obstruction or drives uphill the forces needed to maintain the movement of the housing 1 will increase and the speed of the housing 1 will decrease. The rotation speed of the second shaft 23 will decrease then as well. Due to the need for a higher torque for driving the wheels 28, the tension in the belt 9 will increase. The reduced centrifugal force of the weights 12, due to the lower rotation speed, and the increased forces of the belt 9 on the conical surfaces 8 of the discs 5, 15 cause the discs 5, 15 to move in the direction opposite to the direction A and consequently the radius R decreases. This means that the motor 17 is better able to cope with the increased load on the wheels 28 and the speed will be adapted automatically to the changing circumstances.

In this way the transmission ratio between the first shaft 13 and the second shaft 23 can change continuously and the radius R will adapt itself automatically to the load. It will be clear for the skilled man the way in which the transmission ratio adapts itself to the changing circumstances is influenced by the tension in the spring 22, the mass of the weights 12, the top angle of the conical surface 8 and characteristics of the motor 17. For further influencing the characteristics of this drive it will also be possible to add springs that counteract the centrifugal forces of the weights 12 or one or more springs that push the discs 5, 15 in the direction A or in its opposite direction.

In the embodiment, the belt 9 is shown with a circular section. Other shapes are possible, for instance the section of the belt 9 can be square or diamond-shaped, so that its sides rest against the conical surface 8. The belt 9 can be made from flexible materials such as rubber, or can be made from spring wound steel. The dimension of the belt 9 is such that its smallest dimension, in the shown embodiment its diameter, is at least larger than the width of the slits 6, so that the belt 9 cannot get stuck in the slits 6.

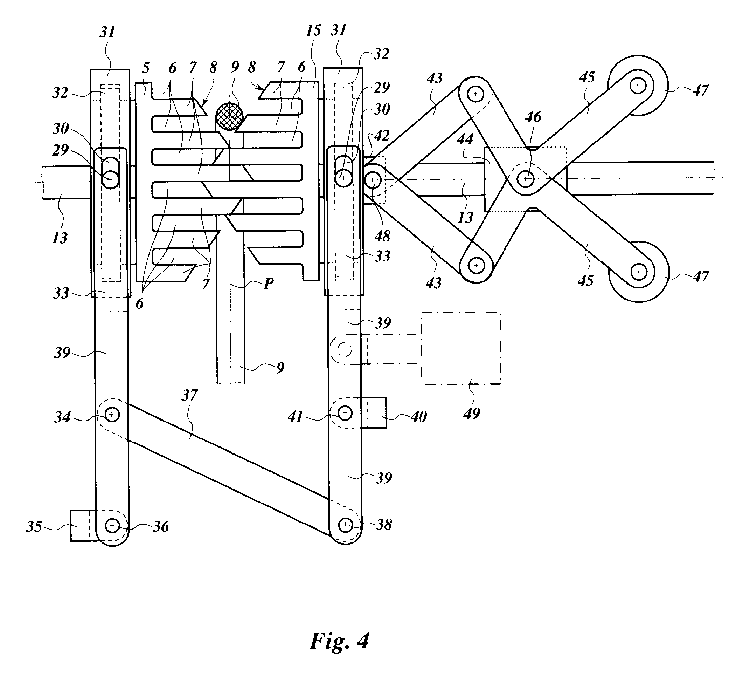

Figure 4 shows details of a continuously variable transmission as shown in figures 1-3. These details show different solutions for positioning the discs 5, 15 in longitudinal direction on the first shaft 13.

In order to align the intersection of the conical surfaces 8 with the drive pulley 20 and the tension pulley 18 more accurately there are coupling means, described hereafter, that couple the axial movement of the discs 5, 15 and ensure that the plane P does not move in axial direction of the first shaft 13. Each disc 5, 15 is provided at the side away from the conical surface 8 with a flange 32 around which a ring 31 is mounted, so that the flange 32 can rotate with the disc 5, 15 while the ring 31 does not rotate. Each ring 31 is provided at opposite sides with a pin 29 that fits in two slots 30 in the prongs of a fork 33 that ends in an arm 39. The arm 39 coupled to the first disc 5 can rotate around a hinge pin 36 that is fastened with a bracket 35 to the housing 1 (not shown). The arm 39 coupled to the second disc 15 can rotate around a hinge pin 41 that is fastened with a bracket 40 to the housing 1. A lever 37 is coupled by a hinge pin 34 to the arm 39 coupled to the first disc 5 and by a hinge pin 38 to the arm 39 coupled to the second disc 15. By coupling of the arms 39 with the lever 37, the discs 5, 15 remain positioned symmetrically relative to the plane P and always move in opposite directions along the first shaft 13.

In the situation whereby the positions of the discs 5, 15 are coupled by the coupling means it remains possible to use the wedge 2 and the weights 12 for displacing the discs 5, 15 in axial direction. It is also possible to use an activator 49, indicated in figure 4 with a dashed-dot line, for controlling the positions of the discs 5, 15. A controller (not indicated) that is connected to sensors for measuring the speed of the housing 1 and/or the motor 17 (not indicated) can control this activator 49. Due to the circumstance that the ridges 7 might cut into the belt 9 when the discs 5, 15 are displaced, it is important that the actuator 49 is only activated when the first shaft 13 rotates. It has been found, that displacing the discs 5, 15 only during rotation of the first shaft prevents damage to the belt 9. In the controller, provisions must be made to prevent movement of the actuator when the rotation speed is lower than a certain level.

In another embodiment, as shown in figure 4, one or both discs 5, 15 are displaced in longitudinal direction along the first shaft 13 by two weights 47 that are located symmetrically on opposite sides of the first shaft 13. The weights 47 are each held between two swivel arms 45 that can swivel around a pin 46, which pins 46 are located at opposite sides of a driver 44. The driver 44 is fastened on the first shaft 13. As shown in figure 4 the second disc 15 has two brackets 42 on the side away from the conical surface 8 on both sides of the first shaft 13 (only one bracket 42 can be seen). Each bracket 42 has a hinge pin 48 and is coupled with two levers 43 to both swivel arms 45. Due to the centrifugal force on the weights 47 the second disc 15 is pushed towards the plane P and the first disc 5 is moved by the coupling means the same distance towards the plane P in opposite direction.

## Claims

1. Continuously variable transmission comprising a first shaft (13) with a first pulley (5,15) rotating around a first rotation axis, a second shaft (23) with a second pulley and a belt (9) looped around the first pulley and the second pulley (20) whereby the first pulley comprises two discs (5,15) with conical surfaces (8) which support the belt at a first radius (R) and which are displaceable by displacing means (2,4,12; 47; 49) relative to one another in the direction of the first rotation axis for changing the first radius **characterized in that** both conical surfaces (8) of the discs (5,15) are provided with parallel ridges (7) and slits (6) parallel to the first rotation axis so that the conical surfaces intersect in a plane (P) perpendicular to the rotation axis whereby the ridges of the one disc slot in the slits of the other disc.

2. Continuously variable transmission according to claim 1 whereby the displacing means (2,4,12; 47; 49) displace one or both discs (5,15) in dependence of the rotation speed of the first shaft (13) and/or second shaft (23).

3. Continuously variable transmission according to claim 1 or 2 whereby a weight (12; 47) rotating with a speed proportional to the rotation speed of the first shaft (13) exerts a force proportional to the rotation speed on one disc (5) directed towards the other disc (15).

4. Continuously variable transmission according to one of the previous claims whereby coupling means (33,37,39) connect the two discs (5,15) so that they move symmetrically relative to the plane (P) in the direction of the first rotation axis.

5. Continuously variable transmission according to one of the previous claims whereby the second pulley (20) has a fixed dimension and a third pulley (18) is pulled against the belt (9) by a spring (22) for tensioning the belt.

6. Continuously variable transmission according to one of the previous claims whereby the conical surface (8) makes an angle between 40 and 70 degrees with the rotation axis.

7. Continuously variable transmission according to one of the previous claims whereby the conical surface (8) makes an angle between 50 and 60 degrees with the rotation axis.

8. Drive means for driving a vehicle with an electrical motor (17) whereby a continuously variable transmission according to one of the previous claims couples the motor to the wheels (28).
